# EUROPÄISCHE PATENTANMELDUNG

(11) **EP 2 177 098 A1**
(43) Veröffentlichungstag der Anmeldung: **21.04.2010**
(21) Anmeldenummer: 09012850.5
(22) Anmeldetag: 10.10.2009
(51) Int. Cl.: A01B 29/04, A01B 49/06, A01C 5/06

(54) **Vorrichtung zum Vorbereiten des Bodens zum Säen und zum Ausbringen von Saatgut**

(30) Priorität: 16.10.2008 DE 202008013716 U; 05.11.2008 DE 202008014705 U
(71) Anmelder: Hendlmeier, Konrad, 93107 Untersanding (DE)
(72) Erfinder: Hendlmeier, Konrad, 93107 Untersanding (DE)
(74) Vertreter: Glück, Martin

(57) **Zusammenfassung**

Die Erfindung betrifft eine Vorrichtung zum Vorbereiten des Bodens für das Säen und Ausbringen von Saatgut, mit rotierenden Räumwerkzeugen (2) in Walzen- oder Reifenform, vorzugsweise Stempelwerkzeugen einer Stempelwalze mit davon getrennt angeordneten Sävorrichtungen (5) mit Saatgutausläufern (7). Vorteilhaft besteht das rotierende Räumwerkzeug (2) aus einzelnen, voneinander beabstandeten Ringen oder Rädern (4) auf einer durchgehenden, quer zur Arbeitsrichtung angeordneten Drehachse (3), wobei die Ringe bzw. Räder (4) eine geschlossene oder teilweise unterbrochene walzenförmige Umfangsfläche bilden. Ferner ist dem rotierenden Räumwerkzeug (2) eine Stempelwalze mit rotierenden, auf einer Drehachse angeordneten Stempelelementen (24) nachlaufend zugeordnet, wobei die Stempelelemente (24) in Fahrtrichtung auf Lücke zwischen jeweils zwei Ringen bzw. Rädern (4) des vorauslaufenden Räumwerkzeuges (2) angeordnet sind, und die Saatgutrohre (5) bei ihren Saatgutausläufen (7) zwischen in der Mitte jeweils zweier benachbarten Ringe bzw. Räder (4) des Räumwerkzeuges (2) und in Linie mit einem zugehörigen Stempelelement (24) der nachlaufenden Stempelwalze angeordnet sind.

## Beschreibung

Die Erfindung betrifft eine Vorrichtung nach dem Oberbegriff des Schutzanspruches 1.

Aus der DE 42 38 022 A1 ist ein Bodenverfestigungsgerät bekannt, das an einem Maschinenrahmen Bodenbearbeitungselemente, z.B. Schare, Scheiben, Grubber oder dgl. an Scharstielen und ein Stempelgerät mit Stempelwerkzeugen z.B. auf zwei hintereinander angeordneten horizontalen Achsen aufweist. Mit einem derartigen Gerät wird erreicht, dass auf dem vorzubereitenden Boden ein störungsfreies Arbeiten zur Verfestigung des Bodens auch bei ungünstigen Boden- und Witterungsverhältnissen sicher gestellt ist und ein Zusetzen der Wirkflächen weitgehend verhindert wird. Des Weiteren werden mit einem derartigen Gerät pflanzliche Rückstände daran gehindert, in die Saatgutrillen zu gelangen und das Auflaufen des Saatgutes störend zu beeinflussen. Ferner wird dabei erreicht, dass ein Verstopfen der Scharstiele durch organisches Material vermieden wird.

Gegenstand der DE 297 14 274 U1 ist eine Bodenverfestigungsvorrichtung, die als Federarme ausgebildete Verdichtungselemente aufweist, die über Befestigungsflansche mit dem die Achse festlegenden Rohr verbunden sind. Der innere Abschnitt eines jeden Befestigungselementes verläuft von dem jeweiligen Befestigungsflansch radial nach außen und geht dort in einen teilkreisförmigen äußeren Abschnitt über. Diese äußeren Abschnitte bilden die Wirkfläche des Stempelwerkzeuges und stellen in ihrer Gesamtheit den Umfangskreis dar, der lediglich an den Stellen unterbrochen ist, die als Spalte zwischen zwei benachbarten äußeren Abschnitten ausgebildet sind.

Bei einem gattungsgemäßen Gerät mit zwei hintereinander angeordneten Federstempelwalzen bestehen die Federstempelelemente beider Walzen aus Federstahl. Dies stellt einen erheblichen wirtschaftlichen Aufwand dar, da die Federstempelelemente aus teuerem Federstahl hergestellt sind. Diese Federstempelelemente sind auf der durchgehenden Achse an einem Ende fest eingespannt, in der Regel an den Speichen verschraubt. Diese Speichen haben in Achsrichtung eine im Vergleich zu den aus Federstahl bestehenden Stempelelementen aus Festigkeitsgründen eine große Breitenabmessung, die dazu führt, dass sich feuchte Erde, organische Rückstände im Boden, Erdklumpen oder dgl. festsetzen und zu Verstopfungen führen und damit eine einwandfreie Arbeitsweise behindern.

Aufgabe der Erfindung ist, Vorrichtungen der gattungsgemäßen Art in der Weise zu verbessern, dass der Aufwand für die Herstellung der Vorrichtung wesentlich geringer, die Arbeitsweise verbessert und damit insgesamt die Effizienz der Vorrichtung gesteigert wird.

Gemäß der Erfindung wird dies mit den Merkmalen des Kennzeichens des Anspruches 1 erreicht. Weitere Ausgestaltungen der Erfindung sind Gegenstand der Unteransprüche.

Die rotierende, walzenförmige Räumvorrichtung besteht aus einzelnen rad- oder ringförmigen, voneinander beabstandeten Räumelementen gleichen Durchmessers auf einer gemeinsamen durchgehenden Achse. Der Abstand zweier benachbarter Räumelemente entspricht dem Abstand zweier benachbarter Säreihen, die jeweils mittig zwischen zwei benachbarten Räumelementen liegen. Die Saatgut-Auslaufvorrichtungen sind einem sich über die gesamte Maschinenbreite erstreckenden Rechen zugeordnet, der durch Federvorspannung gegen den Boden gedrückt wird, der am Maschinenrahmen verstellbar angeordnet ist, und der die Särille vorbereitet, die die aus dem Saatgutauslauf fallenden Saatkörner aufnimmt. Mit Hilfe der Rechenzinken wird ein verdichtetes Saatbeet vorbereitet, auf das das Saatgut über die den Rechenzinken zugeordneten Saatgutausläufe abgelegt wird. Die Rechenvorrichtung ist gelenkig am Maschinenrahmen befestigt und wird durch eine mechanische, hydraulische oder pneumatische Federanordnung gegen das Erdreich angedrückt.

Die Federstempelräder der nachlaufenden Stempelwalze sind in Linie mit dem Saatgutauslauf bzw. der Särille angeordnet, so dass ein Druck auf das Saatgut ausgeübt und das Saatgut in die Särille eingedrückt wird, um einen für das Anlaufen des Saatgutes erforderlichen optimalen Bodenkontakt zu erzielen. Da derartige Stempelwalzen an sich bekannt sind, ist es nicht erforderlich, hier auf deren Einzelheiten einzugehen.

Nachstehend wird die Erfindung in Verbindung mit der Zeichnung anhand eines Ausführungsbeispiels erläutert. Es zeigt:
- Fig. 1: in schematischer Darstellung eine Aufsicht auf die Vorrichtung nach der Erfindung,
- Fig. 2: eine Seitenansicht eines Ring- oder Radelementes des Räumwerkzeuges mit zugeordneter schematischer Darstellung von Querschnittsformen des Ringes,
- Fig. 3: eine andere Ausführungsform eines Ringes oder Rades des Räumwerkzeuges mit unterbrochenem Umfang,
- Fig. 4: eine andere Ausführungsform eines Ring- oder Radelementes der Räumvorrichtung,
- Fig. 5a - 5c: drei verschiedene Querschnittsformen von Laufring und Speiche eines Ringelementes des Räumwerkzeuges, und
- Fig. 6: eine schematische Seitenansicht der erfindungsgemäßen Vorrichtung.

An einem schleppergeführten Maschinenrahmen 1 mit Fahrtrichtung F ist ein rotierendes Räumwerkzeug 2 mit Tragachse 3 und auf dieser Tragachse im Abstand zueinander befestigten Ringen oder Rädern 4 angeordnet, die einen Umfangs- bzw. Laufring 8 aufnehmen, der über Speichen 9 mit der Tragachse 3 verbunden, z.B. bei 10 verschweißt ist. Die Ringe bzw. Räder 4 haben einen Abstand voneinander, der dem Abstand zweier benachbarter Särillen S entspricht. Saatgutrohre 5, die von einem Saatguttank 6 ausgehen und am entgegengesetzten Ende Saatgutausläufe 7 besitzen, sind jeweils mittig zwischen zwei benachbarten Ringen bzw. Rädern 4 angeordnet, so dass sie den Särillen S zugeordnet sind, bzw. das Saatgut exakt in die Särillen S abgelegt wird.

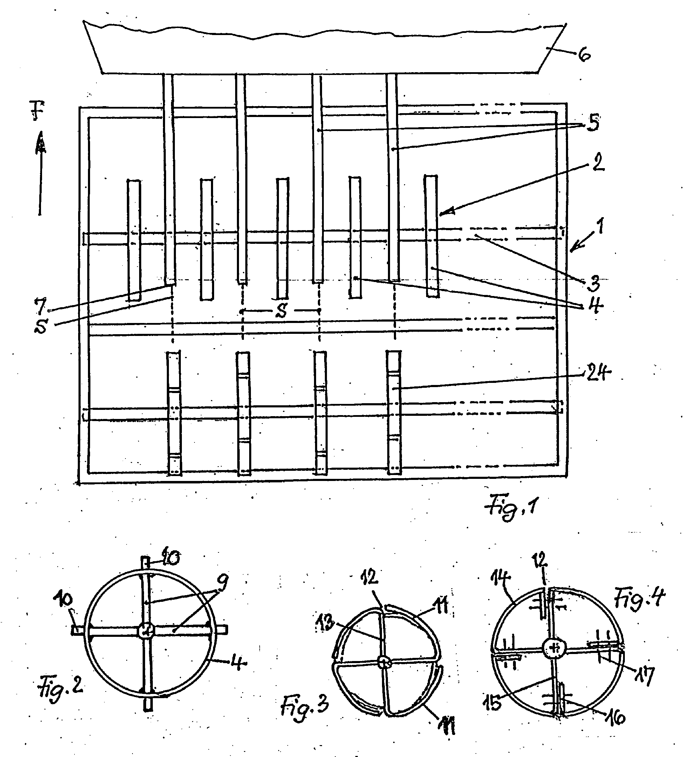

In den Figuren 2, 3 und 4 sind Ausführungsformen der Ringe bzw. Räder 4 dargestellt. Bei der Ausführungsform nach Fig. 2 besteht das Rad 4 aus einem geschlossenen Umfangsring 8 und Speichen 9, die am radial äußeren Ende mit dem Tragring 4 und am radial inneren Ende mit der Tragachse 3 befestigt, vorzugsweise verschweißt sind. Wie in Fig. 2 mit 9' angedeutet, sind die Speichen radial über den Umfangsring 8 hinaus verlängert, wobei die radialen Verlängerungen als zackenförmige Werkzeuge 10 in das Erdreich eindringen und einerseits zur Bodenlockerung und andererseits zum Bodenantrieb der Räder 4 beitragen.

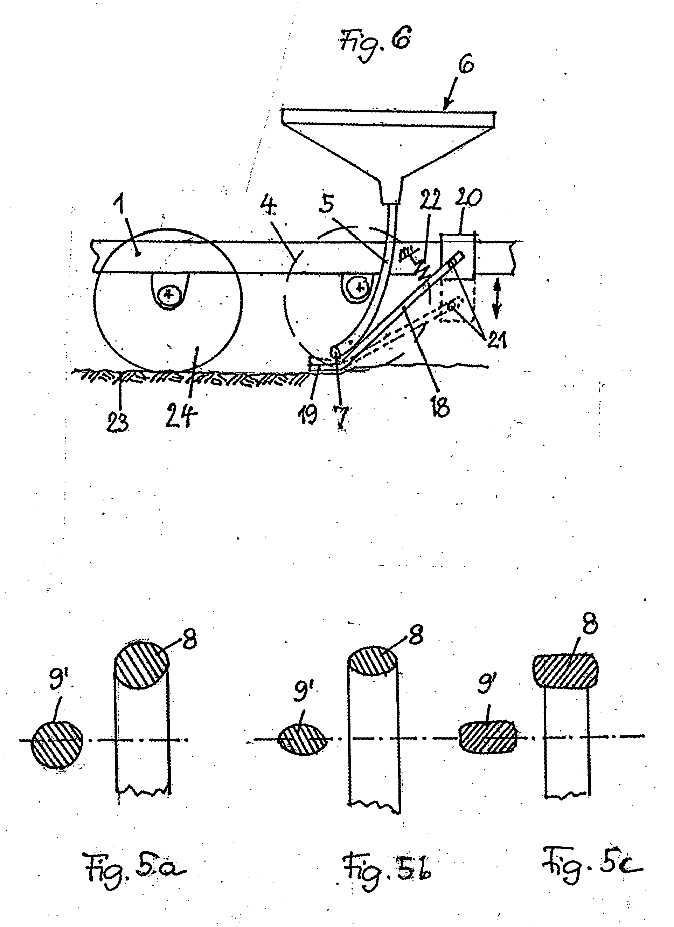

In Verbindung mit der Ausführungsform nach Fig. 2 und entsprechend den Figuren 3 und 4 ist in schematischer Schnittdarstellung der Querschnitt des Umfangringes 8 und einer Speiche 9 gezeigt. Der Umfangsring 8 ist dabei in Fig. 5a z.B. kreisförmig, in Fig. 5b ellipsenförmig und in Fig. 5c rechteckförmig mit stark gerundeten Ecken ausgebildet. Umfangsring 8 und Speiche 9 haben gleichen Durchmesser. Die Speichen 9 sind nach Fig. 5a kreisförmig, nach Fig. 5b ellipsenförmig und nach Fig. 5c rechteckförmig mit gerundeten Kanten dargestellt. Umfangsring 8 und Speiche 9 haben nach Fig. 5a und 5b gleich großen Durchmesser, während bei der Ausführungsform nach Fig. 5c der Durchmesser der Speichen kleiner ist als der Durchmesser des Umfangsringes. Mit derartigen Ausgestaltungen wird erreicht, dass bei schwierigen Bodenverhältnissen ein Verstopfen durch organische Rückstände oder Erdbrocken wirksam verhindert wird.

Der Umfangsring 8 des Rades nach Fig. 3 diskontinuierlich ausgebildet und in einzelne Umfangsabschnitte 11 unterteilt, die jeweils an ihrer Umfangsfläche durch entsprechende Spalte 12 voneinander getrennt sind. Ein einzelnes Element 11 besteht aus einer Speiche 13, an deren radial äußeres Ende das Umfangselement 11 einteilig anschließt und sich über einen Umfangsabschnitt von 90° erstreckt, sodass in Seitenansicht eine etwa V-artige Form entsteht. Der Spalt 12 zwischen zwei benachbarten Umfangselementen 11 ermöglicht, dass das freie Ende eines Umfangselementes beim Auftreffen auf Unebenheiten des Bodens nachgibt und dabei gegen das unmittelbar gegenüberliegende äußere Ende der Speiche 13 anliegt, so dass eine begrenzte Auslenkung bzw. Nachgiebigkeit erzielt wird. Da Speiche und daran anschließender Umfangsabschnitt einteilig ausgebildet sind, wird diese Nachgiebigkeit auf die gesamte Einheit übertragen.

Bei der Radausbildung nach Fig. 4 wird diese Nachgiebigkeit der Umfangsabschnitte 11 weitgehend aufgehoben, indem das freie Ende der Umfangsabschnitte 14 radial nach innen bei 16 abgebogen und dieser abgebogene Teil 16 mit der Speiche 15, die einstückig mit dem Umfangselement 14 hergestellt sein kann, verbunden ist, z.B. durch Schraubverbindung, so dass der entsprechende Umfangsabschnitt beim Auftreffen auf ein Hindernis deformiert werden kann, die Auslenkung jedoch über eine höhenverstellbare Lagerung der Achse 3 vorgenommen wird.

Fig. 6 zeigt eine schematische Darstellung der Gesamtanordnung der neuerungsgemäßen Vorrichtung. An einem Querträger 20 des Maschinenrahmens 1 ist gelenkig bei 21 ein sich über die gesamte Breite des Räumwerkzeuges 2 erstreckender Rechen 18 angeordnet, dessen Rechenzinken 19 jeweils einem Saatgutauslauf 7 zugeordnet sind, wobei die Anzahl der Rechenzinken 19 der der vorhandenen Särillen S entspricht. Die einzelnen Rechenzinken 19 sind im Winkel nach hinten und unten angestellte Zinken, deren unteres Ende etwa säbelförmig gebogen ist. Dieses untere Ende wirkt auf die von den im Frontbereich angeordneten vorauslaufenden Scharen (nicht dargestellt) aufgerissene Rille so ein, dass im Saatbeet die Särille S gezogen wird, in die das Saatgut aus dem Saatgutauslauf 7 in die Särille fällt und anschließend durch die walzenförmige Andrückvorrichtung 24, z.B. eine Stempelwalze, angedrückt wird, die am Maschinenrahmen 1 befestigt ist.

### Bezugszeichenliste

- 1: Maschinenrahmen
- 2: Räumvorrichtung
- 3: Achse von 2
- 4: Ringe bzw. Räder von 2
- 5: Saatgutrohr
- 6: Saatguttank
- 7: Saatgutauslauf
- 8: Umfangselement
- 9: Speiche
- 10: Befestigung
- 11: Abschnitte von 8
- 12: Spalt zwischen Speiche 9 und Abschnitt 11
- 13: Speiche
- 14: Umfangsabschnitt
- 15: Speiche
- 16: Biegeteil
- 17: Schraubverbindung
- 18: Rechen
- 19: Rechenzinken
- 20: Querträger
- 21: Gelenkstelle
- 22: Feder
- 23: Saatbeet
- 24: Andrückvorrichtung
- F: Fahrtrichtung
- S: Särillen

## Patentansprüche

1. Vorrichtung zum Vorbereiten des Bodens für das Säen und zum Ausbringen von Saatgut, mit rotierenden Räumwerkzeugen in Walzen- oder Reifenform, vorzugsweise Stempelwerkzeugen einer Stempelwalze mit davon getrennt angeordneten Sävorrichtungen mit Saatgutausläufern, **dadurch gekennzeichnet, dass**
a) das rotierende Räumwerkzeug aus einzelnen, voneinander beabstandeten Ringen oder Rädern auf einer durchgehenden, quer zur Arbeitsrichtung angeordneten Drehachse besteht, wobei die Ringe bzw. Räder eine geschlossene oder teilweise unterbrochene walzenförmige Umfangsfläche bilden,
b) dem rotierenden Räumwerkzeug eine Stempelwalze mit rotierenden, auf einer Drehachse angeordneten Stempelelementen nachlaufend zugeordnet ist,
c) die Stempelelemente in Fahrtrichtung auf Lücke zwischen jeweils zwei Ringen bzw. Rädern des vorauslaufenden Räumwerkzeuges angeordnet sind, und
d) die Saatgutrohre bei ihren Saatgutausläufen zwischen in der Mitte jeweils zweier benachbarten Ringe bzw. Räder des Räumwerkzeuges und in Linie mit einem zugehörigen Stempelelement der nachlaufenden Stempelwalze angeordnet sind.

2. Vorrichtung nach Anspruch 1, **dadurch gekennzeichnet, dass** die Ringe oder Räder aus im wesentlichen kreisförmigen Umfangselementen mit profilierter Lauffläche bestehen, die mittels Speichen an der durchgehenden Drehachse befestigt sind.

3. Vorrichtung nach Anspruch 1 oder 2, **dadurch gekennzeichnet, dass** die Umfangselemente einen kreisförmigen, quadratischen, rechteckförmigen, elliptischen oder dgl. Querschnitt haben, und dass der Querschnitts-Durchmesser der Speichen kleiner oder gleich dem Querschnitts-Durchmesser der Umfangselemente ist.

4. Vorrichtung nach Anspruch 1 - 3, **dadurch gekennzeichnet, dass** die Umfangselemente einen kontinuierlichen Ring bilden und die Speichen zwischen Umfangselement und Achse befestigt sind.

5. Vorrichtung nach einem der Ansprüche 1 - 3, **dadurch gekennzeichnet, dass** die Umfangselemente aus einem unterbrochenen Ring bestehen und die einzelnen Umfangsabschnitte am einen Ende zu einer Speiche ausgebildet sind, die mit der Achse befestigt ist, während das andere Ende freitragend ausgebildet ist.

6. Vorrichtung nach einem der Ansprüche 2-5, **dadurch gekennzeichnet, dass** die Umfangselemente auf ihrer Außenseite stift- oder zackenförmige Erhebungen aufweisen, die beim Einsatz der Vorrichtung in den Boden eingreifen.

7. Vorrichtung nach Anspruch 6, **dadurch gekennzeichnet, dass** die stift- oder zackenförmigen Elemente als Verlängerung der Speichen auf der Umfangsfläche der Umfangselemente befestigt sind.

8. Vorrichtung nach einem der Ansprüche 1 - 5, **dadurch gekennzeichnet, dass** die Umfangselemente und die Speichen der Ringe bzw. Räder aus Eisen, Stahl oder dgl. Material hergestellt und massiv oder in Rohrform ausgebildet sind.
